# EUROPEAN PATENT APPLICATION

(11) **EP 2 626 548 A1**
(43) Date of publication of application: **14.08.2013**
(21) Application number: 12154303.7
(22) Date of filing: 07.02.2012
(51) Int. Cl.: F03D 3/02, F03D 3/04

(54) **Wind turbine**

(71) Applicant: WFPK Beheer B.V., 1721 AE Broek op Langedijk (NL)
(72) Inventor: Pieneman, William, 1871 AJ Schoorl (NL)
(74) Representative: Bartelds, Erik

(57) **Abstract**

The invention relates to a wind turbine, comprising a rotor rotatable about a vertical shaft and a stator enclosing the rotor, which stator comprises a number of blades which are distributed in peripheral direction and between which channels are defined, the stator comprising at least two layers of blades which are mutually separated by at least one wall.

The invention further relates to a building provided with a wind turbine placed on a high-lying part thereof.

A further aspect of the invention is a light mast provided at or close to its top with a wind turbine.

The invention also comprises a road engineering or hydraulic engineering construction, such as a dike body or water barrier, provided with a wind turbine placed on a high-lying part thereof.

The invention further consists a vehicle provided with a wind turbine.

The invention also includes a vessel provided with a wind turbine.

## Description

The invention relates to a wind turbine comprising a rotor rotatable about a vertical shaft and a stator enclosing the rotor, which stator comprises a number of blades which are distributed in peripheral direction and between which channels are defined. Such a wind turbine is known in many variants.

Now that fossil fuel reserves are dwindling ever further and the demand for energy continues to increase with the advance of industrialization, there is increasing interest in the use of alternative energy sources. This interest is encouraged still further by environmental problems resulting from the use of fossil fuels, particularly global warming.

A problem here is that the greater part of the industrialized world is in temperate climate zones where sunlight is not always available. Since it is relatively often windy in these regions, there is therefore great interest in the use of wind energy.

Wind energy can be generated centrally or locally. In the case of central generation use is made of large wind turbines which are usually placed in relatively unpopulated areas in order to cause as little nuisance as possible. In the case of local generation use is made of relatively small wind turbines which users can place on their own land, for instance on their property.

Wind turbines can be divided into two groups. Best known are wind turbines whose rotor is rotatable about a horizontal shaft. This type of wind turbine is being used to an increasing extent, usually for central energy generation in wind turbine farms. A wind turbine with a horizontal shaft has the drawback however that the rotor must have a large diameter to enable generation of considerable power. Wind turbines in wind farms thus often have a rotor diameter of many tens to even more than a hundred metres. This entails the turbine having to be placed on a high mast or tower, whereby the costs of such wind turbines are relatively high. Nor is this type of wind turbine, due to the large rotor diameter, very suitable for local generation; the private use of such wind turbines remains limited in practice to farms. Such wind turbines moreover always have to be actively directed into the wind, for which purpose complex and expensive mechanisms are necessary.

Another type of wind turbine is the turbine with a rotor which is rotatable round a vertical shaft. Such wind turbines with vertical shaft have the advantage that there is a good approach flow under all conditions, so that no directing mechanism is required. On the other hand, the direction from which the flow approaches each vane or each blade of the rotor is constantly changing during the rotation, whereby the efficiency of the wind turbine remains limited. An advantage of wind turbines with vertical shaft is that they require less space than wind turbines with a horizontal shaft and are therefore easier to fit into the landscape. Such turbines are also better suited to local use, for instance in private households.

The invention now has for its object to provide a wind turbine with vertical shaft which has an improved efficiency compared to conventional wind turbines of this type.

According to the invention this is achieved with a wind turbine of the above described type in that the stator comprises at least two layers of blades which are mutually separated by at least one wall. The approach airflow is thus split into part-flows which can influence each other in favourable manner, whereby the effectiveness of the wind turbine can be increased.

In a preferred embodiment of the wind turbine according to the invention the at least one wall runs substantially horizontally. Channels lying one above another are thus formed as seen in axial direction.

For a higher conversion efficiency it may be advantageous for the number of blades in at least one of the layers to differ from that in the other layer or layers.

When the channels in at least one of the layers extend to a position closer to the shaft than those of the other layer or layers, the air flows at different points into the rotor as seen in radial direction, whereby a favourable interaction between the part-flows can be achieved. The air which has flowed through the channel between the longer blades, wherein the speed has increased and the pressure has decreased, can in particular draw in and accelerate the air flowing through the other channel(s). There is then an ejector effect inside the rotor.

In order to allow a part of the airflow to exit relatively close to the shaft, it is recommended that the at least one separating wall extends at least partially under the rotor.

Each channel preferably further has a flow surface area which decreases as seen in the direction from the outer periphery to the inner periphery of the stator. The air is thus accelerated in the channels before it reaches the rotor, thereby further improving the effectiveness of the wind turbine.

A relatively great narrowing of the channels - and thereby a relatively great acceleration of the air - is achieved when the dimensions of each channel decrease in both the axial direction and transversely thereof as seen from the outer periphery to the inner periphery of the stator.

In order to guide the inflowing air optimally into the rotor it is recommended that the stator blades are curved.

In order to further increase the effectiveness of the wind turbine, the stator preferably has a cover which extends at least partially above the rotor and in which a central opening is formed at the position of the shaft. The flow is guided through the stator and the rotor by the cover, after which at least a part of the air can flow out of the rotor through the central opening.

The energy yield of the wind turbine is increased still further when the cover is at least partially lined with solar cells.

The wind turbine is preferably provided with movable means for at least partially closing the central opening. The flow speed of the air, and thereby the rotation speed of the rotor and of a generator connected thereto, can thus be controlled. This is important in preventing wind turbine and generator overspeed in strong wind.

A structurally simple control is achieved when the closing means comprise a cap movable in axial direction.

In order to enable optimum use of the aerodynamic advantages provided by the particular form of the stator, the rotor preferably has a number of blades, which each have a form adapted to the channels in the different layers of the stator. A high efficiency can thus be achieved by an interaction between the channels and the specially formed blades.

Each rotor blade can for this purpose be divided into a number of segments which correspond to the number of layers and which can be differently profiled. The air flowing out of the channels in the different layers can thus be optimally guided through the rotor.

Each rotor blade then preferably comprises, as seen in radial direction, an inner segment lying close to the shaft and an outer segment lying close to the periphery, wherein the inner segment encloses a smaller angle with the direction of the shaft than the outer segment. The air flowing through the channel of the stator and reaching a position close to the shaft is thus as it were drawn "more steeply" through the rotor than the air from the shorter channel of the stator.

For optimal guiding of the air through the rotor and an optimal co-action of the airflows from the different channels, each rotor blade is preferably cambered in peripheral direction, and the camber decreases as seen in radial direction from the shaft toward the outer periphery. Owing to this camber or curvature the air is gradually deflected between flowing into and leaving the rotor, and losses are minimal.

The guiding of the airflow in the rotor can be improved still further when the rotor comprises a hub on which the blades are mounted, which hub has a decreasing diameter from the bottom of the stator as seen in axial direction. The surface of the hub thus contributes toward the gradual deflection of the flow.

The invention also relates to application of a wind turbine as described above in different situations. The invention thus provides a building, a light mast and a road engineering or hydraulic engineering construction, such as a dike body or water barrier, which can be provided with a wind turbine placed on a high-lying part thereof. The invention also provides a vehicle or a vessel which is provided with such a wind turbine.

The invention will now be elucidated on the basis of an embodiment, wherein reference is made to the accompanying drawing, in which:
Figure 1 is a view of a building with a wind turbine according to the invention thereon,
Figure 2 is a side view of the wind turbine of figure 1,
Figure 3 shows a cross-section through the wind turbine of figures 1 and 2,
Figure 4 is a perspective view of the rotor of the wind turbine,
Figure 5 is a top view of the rotor of the wind turbine, wherein the exits of the lower layer of channels of the stator are shown schematically,
Figure 6 is a top view of the separating wall and the exits of the lower layer of channels of the stator,
Figure 7 shows a cross-section through the bottom and the separating wall of the stator,

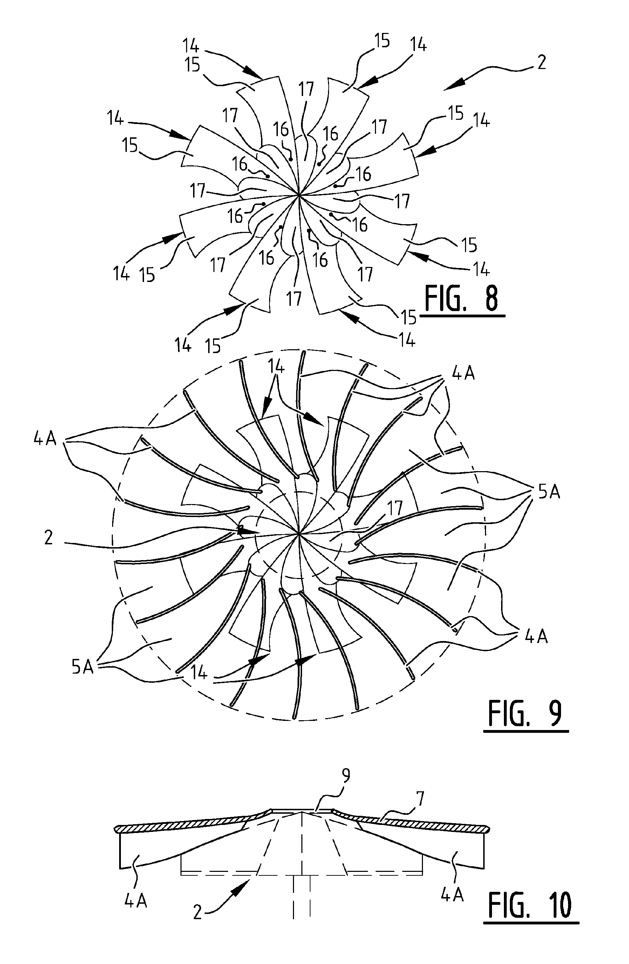

Figure 8 is a top view of the rotor,
Figure 9 shows a cross-section along line IX-IX in figure 10,
Figure 10 shows a cross-section through the upper cover of the stator,

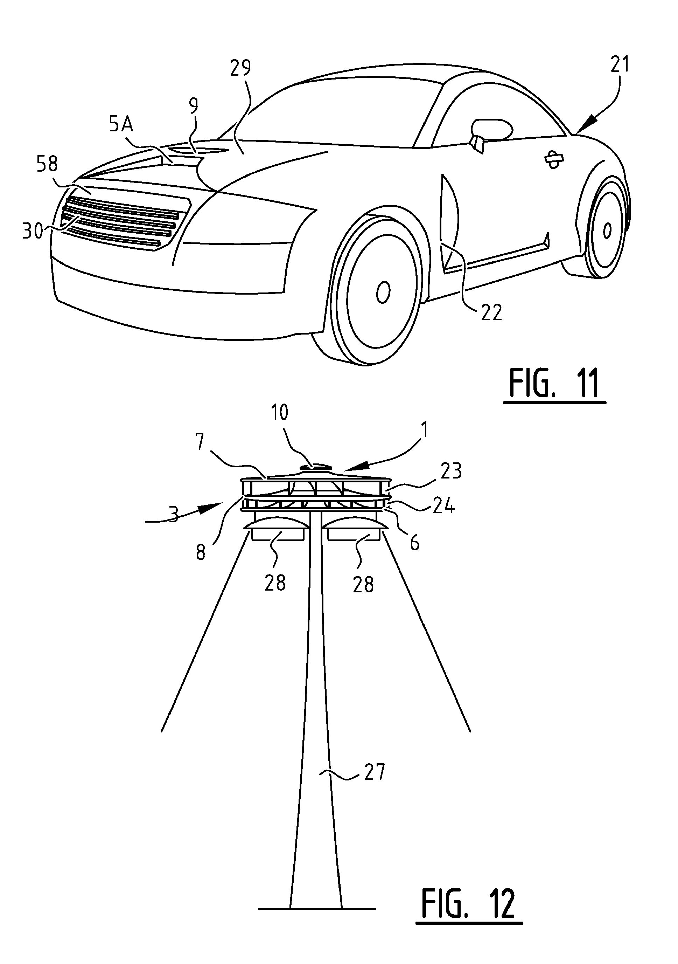

Figure 11 is a perspective view of a motor vehicle in which a wind turbine according to the invention is applied, and
Figure 12 shows a light mast on which a wind turbine according to the invention is arranged.

A wind turbine 1 according to the invention comprises a rotor 2 which is rotatable about a vertical shaft A. Rotor 2 is wholly enclosed by a stator 3. This stator 3 comprises a number of blades 4A, 4B which define a corresponding number of channels 5A, 5B. These blades 4A, 4B are arranged in a number of (here two) layers 23, 24 lying one above the other in axial direction and mutually separated by a wall 8. Stator 3 is further provided with a lower wall or bottom 6 and an upper wall or cover 7. Channels 5A of the upper stator layer 23 are thus bounded by blades 4A, upper wall 7 and separating wall 8. Channels 5B of lower layer 24 are bounded in similar manner by blades 5A, separating wall 8 and bottom 6. In the shown embodiment each layer 23, 24 has eighteen blades 4A, 4B and eighteen channels 5A, 5B. A greater or smaller number can also be chosen depending on the intended application of wind turbine 1. Nor does the number of channels have to be the same in the two layers, but an even number of blades and channels can for instance be used in the one layer and an odd number in the other layer.

In the shown embodiment channels 5A of upper stator layer 23 debouch into rotor 2 at a relatively great distance from shaft A, while channels 5B of lower layer 24 extend further in the direction of shaft A. This is achieved in that separating wall 8 extends partially under rotor 2. Formed in separating wall 8 is a recess 13 with a bottom 20 which lies in the same plane as a central part 25 of lower wall 6. Formed between this central part 25 and the bottom 20 of separating wall 8 is an annular opening 18 which forms the exit of channels 5B of lower layer 24. A part of the air hereby thus flows obliquely from below into rotor 2.

Channels 5A of upper layer 23 are shorter than lower channels 5B. Although blades 4A of upper layer 23 continue substantially as far as blades 4B of lower layer 24, these channels 5A effectively end at the start of recess 13 in intermediate wall 8. The inflowing air is already drawn from here into rotor 2 by the underpressure created by the airflow which reaches rotor 2 via lower channels 5B. Because these channels 5B are longer than channels 5A and also narrow more sharply from the inflow end to the outflow end, this airflow has a lower pressure than the airflow which reaches rotor 2 via upper channels 5A. Owing to this suction action the channels 5B in lower layer 24 function as a kind of ejector.

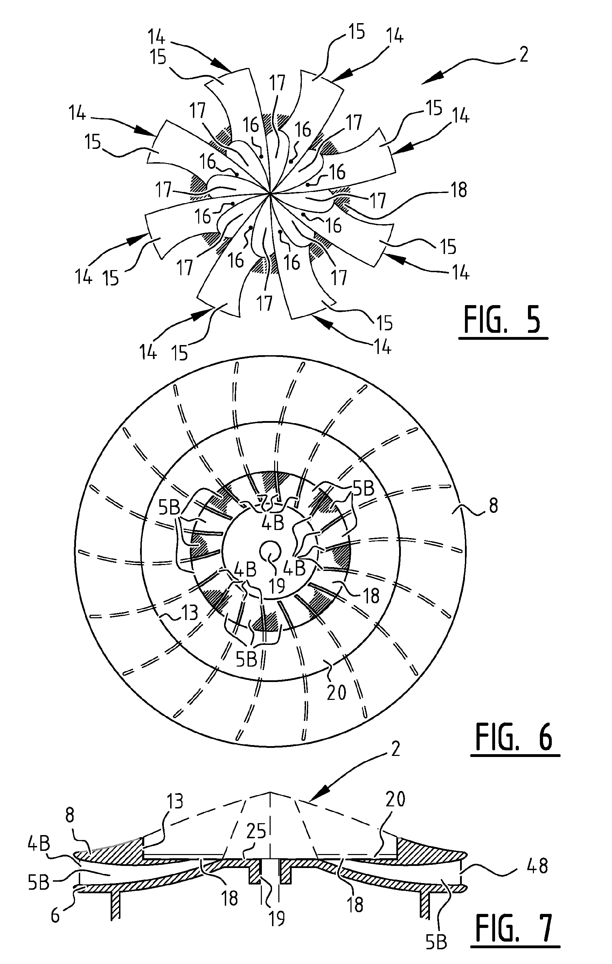

The pressure decrease occurring in channels 5B in lower layer 24 is the result of the decrease in the flow surface area of each of these channels as seen from the outer periphery to the inner periphery of stator 3. As can be seen in figures 6 and 7, the dimensions of each channel 5B decrease as seen in both axial direction and peripheral direction of the stator. Although for channels 5A in upper layer 23 of stator 3 it is also the case that the flow surface area thereof decreases as seen from the outer periphery to the centre of wind turbine 1, this decrease is less pronounced. This is particularly the case because the dimension in axial direction between the outer periphery and the point where recess 13 begins in separating wall 8 does not decrease that much. This is the reason for the considerable difference in speed and pressure between the airflows reaching rotor 2 through upper channels 5A and the airflows fed to rotor 2 through lower channels 5B.

Blades 4A, 4B of stator 3 are otherwise all curved. The approach wind flow is in this way already deflected to some extent so that it flows into the rotating rotor 2 at a favourable angle. Flow losses are hereby limited and efficiency increased.

The design of rotor 2 is modified to the particular approach flow of the air in a plurality of different layers and from different directions. Rotor 2 comprises a hub 17 and a number of (here eight) blades 14 extending in radial direction from hub 17. Both the form of hub 17 and the form of blades 14 is adapted to the path of channels 5A, 5B in the different layers 23, 24 of stator 3. Each rotor blade 14 is thus divided into a number of segments.

In the shown embodiment, wherein there are two layers of channels 5A, 5B, each rotor blade 14 also has two segments, an outer segment 15 lying close to the periphery and an inner segment 16 lying close to shaft A. Since air flows into inner segment 16 which already encloses an angle with the main plane of rotor 2, it is steeper than outer segment 15 into which flows air moving roughly parallel to the main plane of rotor 2. The angle between inner segment 16 and rotation shaft A of rotor 2 is thus smaller than the angle between outer segment 15 and this shaft A. Each blade 14 further has a curved or cambered profile and the degree of curvature also decreases as seen in radial direction from the shaft A to the outer periphery. Inner segment 16 is thus not only steeper than outer segment 15, it also has a smaller radius of curvature. The surface of hub 17 is adapted to the form of rotor blades 14. Hub 17 tapers from central part 25 of lower wall 6 in the direction of upper wall 7 and ends in a point 26. The side wall of hub 17 has a slightly concave camber, more or less in the form of a shell, at the position of each rotor blade 14.

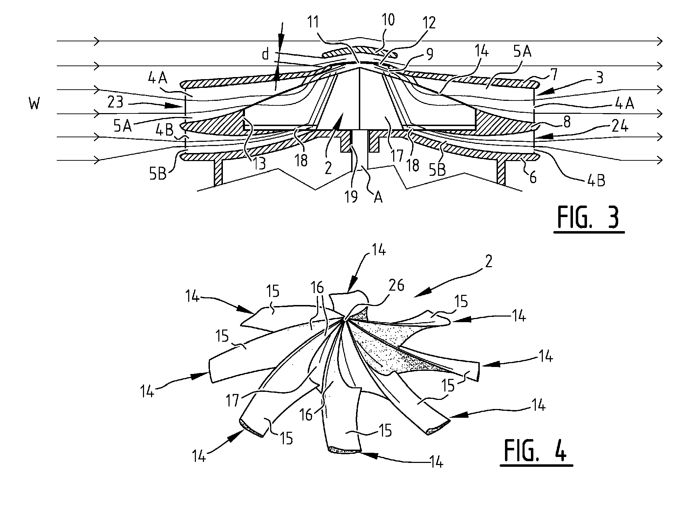

The airflows reaching rotor 2 through channels 5A and 5B are drawn toward hub 17 and guided upward therealong in the direction of upper wall 7. Formed in this upper wall 7 is a central opening 9 through which a part of the air can flow out of wind turbine 1. This opening 9 can be wholly or partially closed by movable closing means. In the shown embodiment these closing means take the form of a cap 10 which is attached via a shaft 11 to a frame 12 formed in the central opening. This cap 10 is movable in axial direction. Shaft 11 can for instance be provided for this purpose with screw thread. The distance D relative to cover 7 is increased or decreased by displacing the cap 10, whereby the back-pressure there is varied. It is hereby possible to control which part of the airflow leaves the wind turbine through central opening 9 and which part is deflected to the outflow side of wind turbine 1. On this outflow side, on the right in figure 3, the airflow is once again divided into a part which flows out through upper channels 5A and a part which flows out through lower channels 5B.

Owing to the divided flow to rotor 2 and the particular form of the rotor, considerably more advantageous pressure ratios are achieved than in conventional wind turbines with vertical shaft. Wind turbine 1 according to the invention hereby has a clearly higher efficiency than conventional wind turbines of this general type. The power generated can moreover be well controlled by opening the central opening 9 to greater or lesser extent, whereby the pressure ratios can be influenced.

Wind turbine 1 according to the invention moreover has a very simple construction. Stator 3 can thus be constructed from three components, lower wall 6 with lower blades 4B, separating wall 8 and upper wall 7 with upper blades 4A. Rotor 2 can be manufactured in simple manner as one whole.

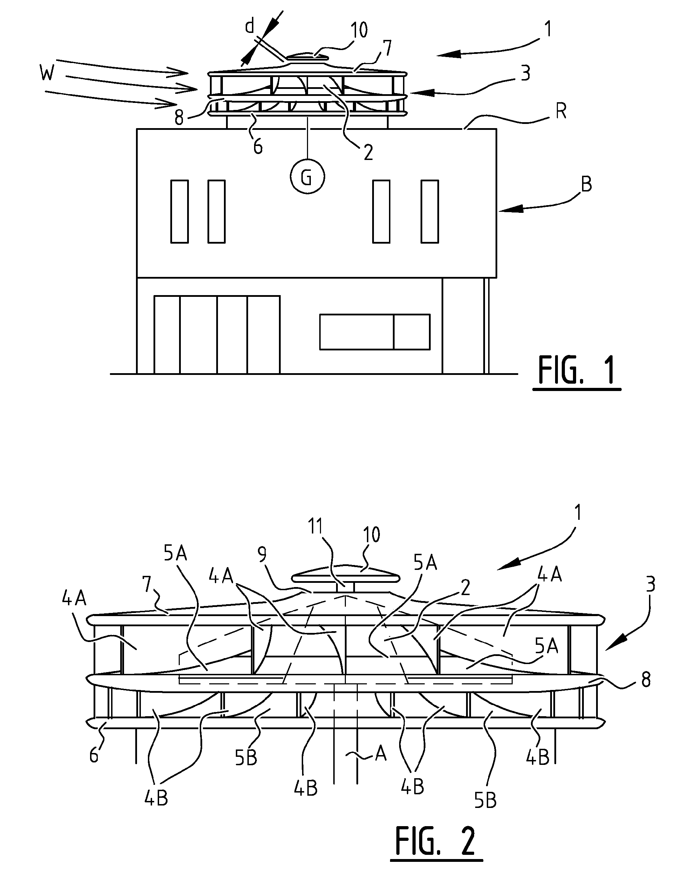

Wind turbine 1 according to the invention is suitable for a wide variety of applications, both stationary and mobile. Figure 1 shows that a wind turbine 1 according to the invention is placed on the roof R of a building B. Wind turbine 1 can here fulfil a large part of the energy requirement of building B. The shaft A of the turbine is connected - optionally via a transmission - to an electrical generator G which is only shown schematically here. Because stator 3 is provided all the way round with blades 4 and channels 5, wind turbine 1 operates in any wind direction.

Wind turbine 1 according to the invention can also be applied at other high points. It is for instance possible to envisage road engineering and hydraulic engineering constructions such as dike bodies or water barriers. Another stationary application which is provided for is the placing of wind turbine 1 at the top of a light mast 27. Such a light mast 27 can be provided with a number of fittings with lamps 28, which can be suspended from the bottom of wind turbine 1. Wind turbine 1 can then generate the electrical energy needed to power the lamps. A further provision can be made for this purpose in the light mast in order to store this energy, for instance in the form of a battery connected to the generator.

Another stationary application which can be envisaged is the placing of wind turbine 1 in the roof of for instance a storage space to be cooled. The upper layer 23 of the stator can then protrude here above the roof, while lower layer 24 can be connected to the interior of the space. Wind turbine 1 can then also be used to extract air from the space, i.e. as fan. In addition, the energy generated by wind turbine 1 can be used to supply power for cooling the space.

As possible non-stationary application of wind turbine 1 it is possible to envisage use in a vehicle 21. This vehicle can be provided with an electric motor which can function as auxiliary drive (hybrid) or as main drive. Wind turbine 1 can in this case be built in under the hood, wherein the upper layer 23 of stator 3 is supplied with air flowing in through an opening 5A in hood 29, while lower layer 24 of the stator can be supplied through an opening 5B in grille 30 of vehicle 21. The air which has flowed through rotor 2 can flow away again either via an opening 9 in hood 29 or through openings 22 in the sides of vehicle 21.

Another possible non-stationary application which is not shown here in further detail is the use of wind turbine 1 on board a vessel. Because the wind will generally be stronger at sea than on land, a wind turbine 1 on a vessel can generate a relatively large amount of energy with which a drive of the vessel can be powered.

Although the invention is elucidated above on the basis of a number of embodiments, it is not limited thereto and can be varied in many ways. Stator 3 could for instance have more than two layers of blades and channels, wherein the form of rotor 2 could then also be modified. The form of the blades of the stator could also be other than shown here, while the form of bottom 6, separating wall 8 and upper cover 7 could of course also be varied. The dimensions of the wind turbine can in principle be chosen freely, depending on the energy requirement. This may vary from a very small embodiment for private use to very large dimensions for energy generation for companies or residential areas.

The scope of the invention is therefore defined solely by the following claims.

## Claims

1. Wind turbine, comprising a rotor rotatable about a vertical shaft and a stator enclosing the rotor, which stator comprises a number of blades which are distributed in peripheral direction and between which channels are defined, **characterized in that** the stator comprises at least two layers of blades which are mutually separated by at least one wall.

2. Wind turbine as claimed in claim 1, **characterized in that** the at least one wall runs substantially horizontally.

3. Wind turbine as claimed in claim 1 or 2, **characterized in that** the number of blades in at least one of the layers differs from that in the other layer or layers.

4. Wind turbine as claimed in claim 2 or 3, **characterized in that** the channels in at least one of the layers extend to a position closer to the shaft than those of the other layer or layers.

5. Wind turbine as claimed in claim 4, **characterized in that** the at least one separating wall extends at least partially under the rotor.

6. Wind turbine as claimed in any of the foregoing claims, **characterized in that** each channel has a flow surface area which decreases as seen in the direction from the outer periphery to the inner periphery of the stator.

7. Wind turbine as claimed in claim 6, **characterized in that** the dimensions of each channel decrease in both the axial direction and transversely thereof as seen from the outer periphery to the inner periphery of the stator.

8. Wind turbine as claimed in any of the foregoing claims, **characterized in that** the stator blades are curved.

9. Wind turbine as claimed in any of the foregoing claims, **characterized in that** the stator has a cover which extends at least partially above the rotor and in which a central opening is formed at the position of the shaft.

10. Wind turbine as claimed in claim 9, **characterized in that** the cover is at least partially lined with solar cells.

11. Wind turbine as claimed in claim 9 or 10, **characterized by** movable means for at least partially closing the central opening.

12. Wind turbine as claimed in claim 11, **characterized in that** the closing means comprise a cap movable in axial direction.

13. Wind turbine as claimed in any of the foregoing claims, **characterized in that** the rotor has a number of blades, which each have a form adapted to the channels in the different layers of the stator.

14. Wind turbine as claimed in claim 13, **characterized in that** each rotor blade is divided into a number of segments which correspond to the number of layers and which are differently profiled.

15. Wind turbine as claimed in claim 14, **characterized in that** each rotor blade comprises, as seen in radial direction, an inner segment lying close to the shaft and an outer segment lying close to the periphery, wherein the inner segment encloses a smaller angle with the direction of the shaft than the outer segment.

16. Wind turbine as claimed in claim 15, **characterized in that** each rotor blade is curved in peripheral direction, and the curvature decreases as seen in radial direction from the shaft toward the outer periphery.

17. Wind turbine as claimed in any of the claims 13-16, **characterized in that** the rotor comprises a hub on which the blades are mounted, which hub has a decreasing diameter from the separating wall of the stator as seen in axial direction.

18. Building provided with a wind turbine as claimed in any of the foregoing claims placed on a high-lying part thereof.

19. Light mast provided at or close to its top with a wind turbine as claimed in any of the foregoing claims.

20. Road engineering or hydraulic engineering construction, such as a dike body or water barrier, provided with a wind turbine as claimed in any of the foregoing claims placed on a high-lying part thereof.

21. Vehicle provided with a wind turbine as claimed in any of the foregoing claims.

22. Vessel provided with a wind turbine as claimed in any of the foregoing claims.
